# EUROPEAN PATENT SPECIFICATION

(11) **EP 4 723 554 B1**
(45) Date of publication and mention of the grant of the patent: **21.10.2026**
(21) Application number: 25204571.1
(22) Date of filing: 25.09.2025
(51) Int. Cl.: H04L 9/40

(54) **METHOD FOR ACCESSING REMOTE SERVER AND SYSTEM THEREOF**
VERFAHREN ZUM ZUGRIFF AUF EINEN ENTFERNTEN SERVER UND SYSTEM DAFÜR
PROCÉDÉ D'ACCÈS À UN SERVEUR DISTANT ET SYSTÈME ASSOCIÉ

(30) Priority: 02.10.2024 KR 20240134106
(43) Date of publication of application: 08.04.2026
(73) Proprietor: Samsung SDS Co., Ltd., Seoul 05510 (KR)
(72) Inventor: Moon, Sooyeon, 05510 Seoul (KR); Kwon, Hyukwon, 05510 Seoul (KR); Kim, Taehun, 05510 Seoul (KR); Park, Jeehong, 05510 Seoul (KR); Kim, Semi, 05510 Seoul (KR); Park, Soeun, 05510 Seoul (KR); Choi, Donghyuk, 05510 Seoul (KR)
(74) Representative: Grünecker Patent- und Rechtsanwälte PartG mbB

(56) References cited:
- CN-A- 118 300 872
- CN-A- 118 612 316
- US-A1- 20250 254 155

## Description

### [Technical Field]

The present disclosure relates to a technology for accessing a remote server and, more specifically, to a method for accessing a remote server existing within a private network by using a SSH protocol and a system thereof.

### [Background Art]

A secure shell (SSH) protocol is a method for a remote login from one computer to another with security. The SSH uses encryption to authenticate and encrypt a connection between a client and a server. The SSH supports tunneling or port forwarding, which enables data packets to pass through networks that would otherwise not be able to be passed through. Such SSH is frequently used to remotely control servers, manage infrastructure, and transfer files.

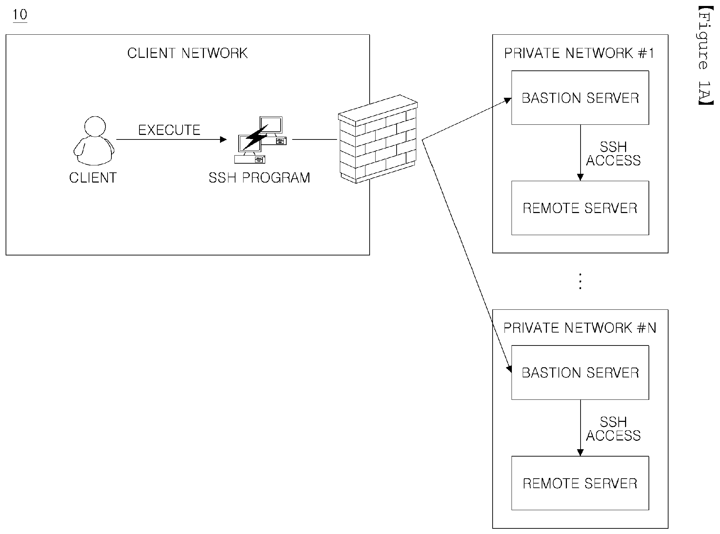

As shown in FIG. 1A, a conventional remote server access system 10 includes a client network including a client and a private network including a remote server. The client accesses a corresponding remote server through an externally exposed bastion server while belonging to the same network as the corresponding remote server. Here, the client accesses the remote server by using a SSH program. However, when multiple private networks are the target of access, there is a need for centralized system-level management of clients accessing through bastion servers of each private network.

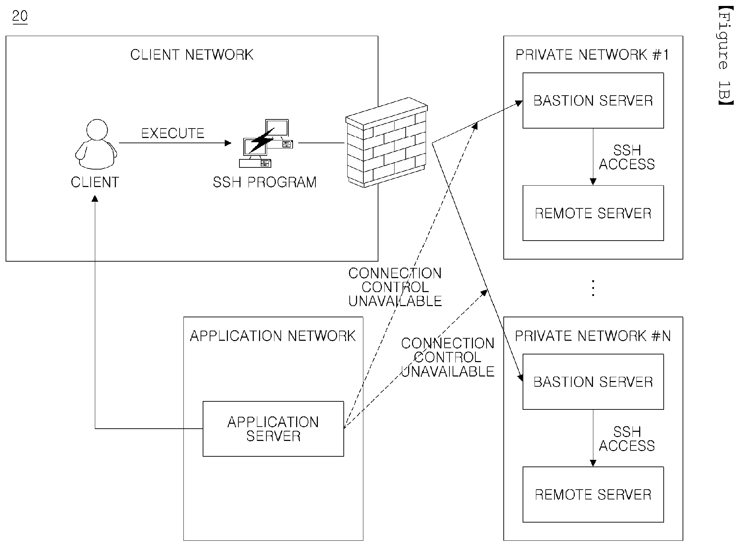

In response to this need, a remote server access system 20 as shown in FIG. 1B has been proposed. The remote server access system 20 has a structure that manages client access information by additionally disposing an application network that includes an application server. In this structure, a client accesses a remote server on the basis of access information received from the application server. However, in the case of the system 20, there was a problem in that it was possible to control the client's access information, but the client could attempt to access the remote server without going through the application server, making it impossible to control the access path itself.

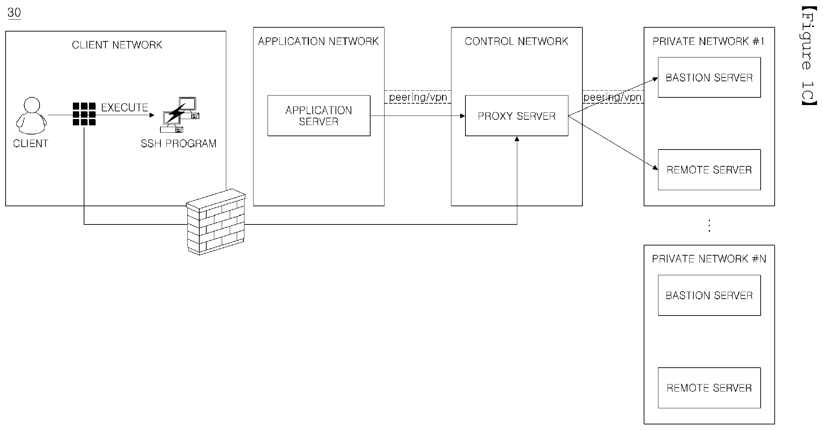

In address this problem, a remote server access system 30 as shown in FIG. 1C has been proposed. The remote server access system 30 has a structure that disposes a control network between an application network and multiple private networks, and installs a proxy server within the control network to relay connections between clients and remote servers. The remote server access system 30 is configured to control connections between clients and remote servers by connecting the application network and the control network, and the control network and multiple private networks, through a virtual private network (VPN) or virtual private cloud peering (VPC peering). However, the system 30 had a problem where, if classless interdomain routing (CIDR) blocks of private networks overlapped, IP conflicts occurred, making communication between clients and remote servers impossible using a single proxy server.

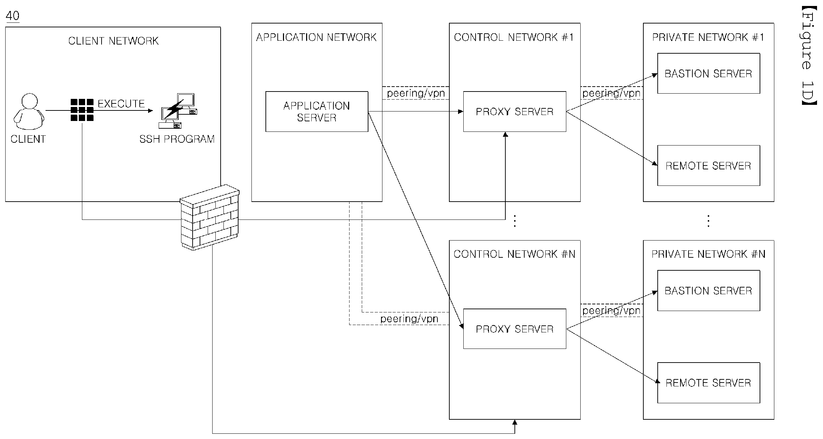

In address this problem, a remote server access system 40 as shown in FIG. 1D has been proposed. The remote server access system 40 has a structure that adds a control network including a proxy server whenever an IP address range within a private network overlaps. However, in the case of the conventional system 40, as the number of private networks to be connected increases, a routing table for managing CIDR blocks becomes increasingly complex. In addition, there is a problem of increased costs associated with equipment purchases and cloud service usage due to the additional configuration of the control network. Additionally, there is the problem in that a VPN or VPC peering produces a dependency between the two networks, which may affect the connection with the other network if one network is deleted or configuration thereof changes. Therefore, a new remote server access solution is needed to address these problems.

### [Disclosure]

### [Technical Problem]

The present disclosure is to solve the aforementioned problems and other problems. Another aspect is to provide a method and system for securely accessing target servers within a target network using SSH multi-tunneling with enhanced security.

Another aspect is to provide a method and system for temporarily generating a first tunnel between an application server and a proxy server within a service network, and a second tunnel between the proxy server and a bastion server within a target network, and for configuring client account information and server access information using the generated multiple tunnels.

Another aspect is to provide a method and system for accessing a target server within a target network by generating a third tunnel between a client and a proxy server of a service network and a fourth tunnel between the proxy server and a bastion server of the target network when the client requests access to the target server, and utilizing the generated multiple tunnels.

### [Technical Solution]

According to an aspect of the present disclosure to achieve the aforementioned or other purposes, provided is a remote server access method of a client, the method including transmitting, to an application server of a service network, a message for requesting an access to a target server of a target network; receiving, from the application server, one or more token information for accessing the target server; generating multiple tunnels between the client and a bastion server of the target network based on the one or more token information; and accessing the target server in the target network using the generated multiple tunnels.

Preferably, the one or more token information may include first token information for accessing a proxy server of the service network, second token information for accessing the bastion server of the target network, and third token information for accessing the target server.

Preferably, the first token information may include client account information and server access information of the proxy server, and the client account information of the proxy server may include identification information and key information of a client existing within the proxy server.

Preferably, the second token information may include client account information and server access information of the bastion server, and the client account information of the bastion server may include identification information and password information of a client existing within the bastion server.

Preferably, the third token information may include client account information and server access information of the target server, and the client account information of the target server may include identification information and password information of a client existing within the target server.

Preferably, the generating of the multiple tunnels may include generating a first tunnel between the client and the proxy server of the service network based on the first token information and generating a second tunnel between the proxy server and the bastion server of the target network based on the second token information.

Preferably, the generating of the multiple tunnels may include executing a pre-installed agent program and generating the multiple tunnels by using the agent program.

Preferably, the accessing the target server may include executing a pre-installed secure shell (SSH) program and accessing the target server by using the SSH program.

Preferably, the remote server access method may further include transmitting, to the application server, tunneling information regarding the multiple tunnels.

Another aspect of the present disclosure provides a client including at least one processor configured to execute a plurality of operations for a remote server access; and at least one memory configured to store a plurality of instructions for executing the plurality of operations, wherein the plurality of operations comprise: an operation of transmitting, to an application server of a service network, a message for requesting an access to a target server of a target network; an operation of receiving, from the application server, one or more token information for accessing the target server; an operation of generating multiple tunnels between the client and a bastion server of the target network based on the one or more token information; and an operation of accessing the target server in the target network using the generated multiple tunnels.

Still another aspect of the present disclosure provides a control method of an application server existing within a service network, wherein the control method includes generating a first tunnel between the application server and a proxy server of the service network and generating a second tunnel between the proxy server and a bastion server of a target network, configuring client account information and server access information of the proxy server when a client requests access to the target server, configuring client account information and server access information of the bastion server through the first tunnel, and configuring client account information and server access information of a target server existing within the target network through the second tunnel.

Preferably, the control method may further include generating a key when access to the target server is requested.

Preferably, the client account information of the proxy server may include identification information and key information of the client. Preferably, the client account information of the bastion server and the target server may include identification information and password information of the client.

Preferably, the control method may further include generating first token information including the client account information and server access information of the proxy server, generating second token information including the client account information and server access information of the bastion server, and generating third token information including the client account information and server access information of the target server. Furthermore, the control method may further include encrypting the first to third token information and transmitting same to the client.

Preferably, the control method may further include disconnecting the first and second tunnels when the configuration for the client account information and the sever access information has been completed.

Preferably, the control method may further include transmitting an agent program to the client.

Preferably, the control method may further include receiving, from the client, tunneling information regarding the multiple tunnels generated by the client. In addition, the control method may further include detecting a generation time point of the multiple tunnels on the basis of the tunneling information received from the client, and resetting the client account information and server access information of the proxy server, the bastion server, and the target server after a predetermined time period has elapsed from the detected generation time point.

Still another aspect of the present disclosure provides an application server including at least one processor configured to execute a plurality of operations for a remote server access and at least one memory configured to store a plurality of instructions for executing the multiple operations, wherein the plurality of operations include an operation of generating a first tunnel between the application server and a proxy server of the service network and generating a second tunnel between the proxy server and a bastion server of a target network, an operation of configuring client account information and server access information of the proxy server when a client requests access to the target server, an operation of configuring client account information and server access information of the bastion server through the first tunnel, and an operation of configuring client account information and server access information of a target server existing within the target network through the second tunnel.

### [Advantageous Effects]

The effects of the remote server access method and the system thereof according to the embodiments of the present disclosure are described as follows.

According to at least one embodiment of the present disclosure, the remote server access method and the system thereof may effectively resolve issues associated with existing remote server access methods while providing a differentiated approach that enhances security and cost efficiency through SSH multi-tunneling.

In addition, according to at least one embodiment of the present disclosure, the remote server access method and the system thereof may effectively manage the client's access through the service network, which includes the application server and the proxy server, so that the client does not directly access the bastion server of the target network.

In addition, according to at least one embodiment of the present disclosure, the remote server access method and the system thereof may establish a secure remote access environment without requiring separate VPN equipment or cloud services and may reduce system operating costs by eliminating the need to add proxy servers due to CIDR block duplication.

Furthermore, according to at least one embodiment of the present disclosure, the remote server access method and the system thereof may facilitate easier network management compared to conventional methods, as deleting one network or changing the configuration thereof does not affect connections with other networks.

It will be appreciated by a person skilled in the art that the effects achieved by the remote server access method and the system thereof according to embodiments of the present disclosure are not limited to the effects described above and other effects that are not described above will be clearly understood from the following detailed description.

### [Description of Drawings]

The accompanying drawings are incorporated into and constitute a part of the detailed description to aid in the understanding of the present disclosure and together with the detailed description, illustrate embodiments and technical features of the present disclosure.
FIGS. 1A to 1D are views illustrating a conventional remote server access system;
FIG. 2 is a view illustrating a configuration of a remote server access system according to an embodiment of the present disclosure;
FIG. 3 is a flowchart illustrating an agent program download method according to an embodiment of the present disclosure;
FIG. 4 is a flowchart illustrating an access control network configuration method according to an embodiment of the present disclosure;
FIG. 5 is a flowchart illustrating a remote server access method according to an embodiment of the present disclosure; and
FIG. 6 is a configuration block view of a computing device according to an embodiment of the present disclosure.

### [DETAILED DESCRIPTION OF THE INVENTION]

In reference to the attached drawings, detailed descriptions of the embodiments disclosed in the present disclosure will be provided and identical or similar components, regardless of the drawing numerals, are assigned the same reference numbers, and redundant explanations regarding these components will be omitted. Herein, the suffixes "module" and "unit" for the elements used in the following description are given or used in common by considering facilitation in writing this disclosure only but fail to have meanings or roles discriminated from each other. That is, the term "unit" used in the present disclosure means software and a hardware component such as a FPGA or an ASIC, and the "unit" performs predetermined roles. However, the meaning of the "unit" is not limited to software or hardware. The "unit" may be configured to be in an addressable storage medium or to execute one or more processors. Therefore, as an example, a "unit" may include components, such as software components, object-oriented software components, class components, and task components, as well as processors, functions, attributes, procedures, subroutines, segments of program codes, drivers, firmware, micro-codes, circuits, data, databases, data structures, tables, arrays, and variables. Functions provided in components and "units" may be combined into a smaller number of components and "units" or subdivided into additional components and "units."

In the following description of the disclosure, a detailed description of related prior art incorporated herein will be omitted when it is determined that the description may make the subject matter of embodiments disclosed in the disclosure unclear. The accompanying drawings are only for easy understanding of the embodiments disclosed in the present specification, and the technical ideas disclosed in the present specification are not limited by the accompanying drawings and it should be understood to include all modifications, equivalents and substitutes included in the spirit and scope of the present disclosure.

The present disclosure proposes a method and system for securely accessing target servers within a target network using SSH multi-tunneling with enhanced security. Furthermore, the present disclosure proposes a method and system for temporarily generating a first tunnel between an application server and a proxy server within a service network, and a second tunnel between the proxy server and a bastion server within a target network, and for configuring client account information and server access information using the generated multiple tunnels. Furthermore, the present disclosure proposes a method and system for accessing a target server within a target network by generating a third tunnel between a client and a proxy server of a service network and a fourth tunnel between the proxy server and a bastion server of the target network when the client requests access to the target server, and utilizing the generated multiple tunnels.

Hereinafter in this specification, a remote server that a client attempts to access among multiple remote servers existing within multiple private networks shall be referred to as a target server. In addition, among multiple private networks, a private network in which a target server exists shall be referred to as a target network. In addition, the proxy server existing within a service network is a server that performs relay functions and may be referred to as a jump server or jump host.

Hereinafter, various embodiments of the present disclosure will be described in detail with reference to the drawings.

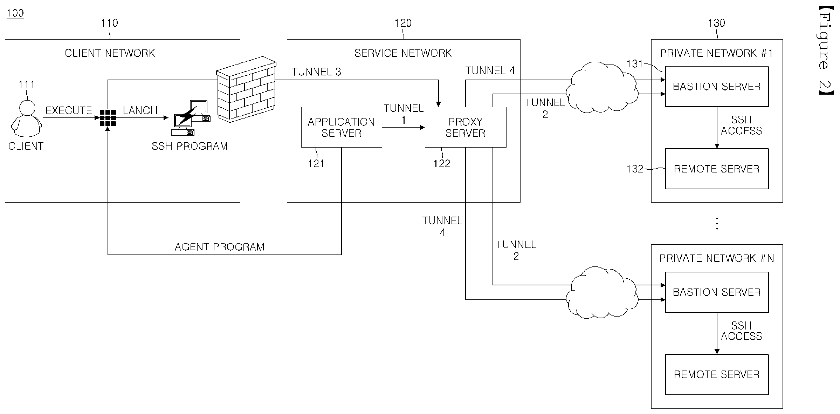

FIG. 2 is a view illustrating a configuration of a remote server access system according to an embodiment of the present disclosure.

Referring to FIG. 2, the remote server access system 100 according to an embodiment of the present disclosure may include a client network 110, a service network 120, multiple private networks 130, and a communication network (not shown).

The client network 110 and the service network 120 may be connected to each other through the communication network. The service network 120 and the multiple private networks 130 may be also connected to each other through the communication network. The communication network may include wired and wireless networks, specifically encompassing various networks such as a local area network (LAN), a metropolitan area network (MAN), and a wide area network (WAN). In addition, the communication network may also include the public World Wide Web (WWW). However, the communication network according to the present disclosure is not limited to the networks listed above and may also include at least one of a known wireless data network, a known telephone network, or a known wired/wireless television network.

The client network 110 may include at least one client 111. The client 111 may perform a function to access a remote server 132 existing within the private network 130.

The client 111 may download and install an agent program from an application server 121 in the service network 120, an external server (not shown), or the like. The client 111 may execute a pre-installed agent program to generate multiple tunnels for accessing a target server 132 within the target network 130. Here, the client 111 may generate the multiple tunnels on the basis of first to third token information received from the application server 121. Here, the first token information may include client account information and server access information of the proxy server 122. The second token information may include client account information and server access information of a bastion server 131. The third token information may include client account information and server access information of the target server 132.

The client 111 may provide information (hereinafter referred to as "tunneling information") regarding the generated multiple tunnels to the application server 121. In this case, the client 111 may provide the tunneling information to the application server 121 by using the agent program.

The client 111 may download and install a SSH program from an application server 121 in the service network 120, an external server (not shown), or the like. The client 111 may execute a preinstalled SSH program to access the target server 132 existing within the target network 130. Here, the client 111 may access the target server 132 by using pre-established multiple tunnels through the agent program.

The clients described in this specification may include a desktop computer, a laptop computer, a slate PC, a tablet PC, an ultra-book, a mobile phone, a smart phone, a digital broadcasting terminal, a personal digital assistant (PDA), a portable multimedia player (PMP), a navigation device, a wearable device, and others, and is not necessarily limited thereto.

The service network 120 may include the application server 121 and the proxy server 123.

The application server 121 may provide a remote access service to the client 111. To this end, the application server 121 may provide an agent program and/or SSH program to the client 111.

The application server 121 may control an access between the client 111 and the remote server 132. To this end, the application server 121 may temporarily generate multiple tunnels for controlling the access of the client 111. For example, the application server 121 may temporarily generate a first tunnel between the application server 121 and the proxy server 122, and may temporarily generate a second tunnel between the proxy server 122 and the bastion server 131 of the target network 130.

The application server 121 may configure the client account information and server access information of the proxy server 122 existing within the service network 120. Here, the client account information may include identification information (ID) and key information of the client 111 existing within the proxy server 122. The key information may include an asymmetric key. The server access information may include network path information for accessing the proxy server 122. The network path information may include IP address information, port information, and the like.

The application server 121 may configure the client account information and server access information of the bastion server 131 through the temporarily generated first tunnel. Here, the client account information may include identification information (ID) and password information of the client 111 existing within the bastion server 131. The server access information may include network path information for accessing the bastion server 131.

The application server 121 may configure the client account information and server access information of the target server 132 through the temporarily generated second tunnel. Here, the client account information may include identification information (ID) and password information of the client 111 existing within the target server 132. The server access information may include network path information for accessing the target server 132.

The application server 121 may provide the client 111 with first token information for accessing the proxy server 122, second token information for accessing the bastion server 131, and third token information for accessing the target server 132. Subsequently, the application server 121 may release the connection of the temporarily generated first and second tunnels.

The application server 121 may receive information (i.e., tunneling information) regarding multiple tunnels generated by the client 111 from the client 111. The application server 121 may detect a generation time point for multiple tunnels on the basis of the tunneling information received from the client 111, and may reset the client account information and server access information of the proxy server 122, the bastion server 131, and the target server 132 after a predetermined time period (e.g., 5 minutes) has elapsed from the detected generation time point.

The proxy server 122 may relay a connection between the client 111 existing within the client network 110 and the bastion server 131 existing within the private network 130. The proxy server 122 may control the connection between the client 111 and the bastion server 131 according to a control instruction from the application server 121.

Each private network 130 may include the bastion server 131 and the remote server 132.

The Bastion server 131 is an access point that is the only way to access the interior of the private network 130 from the outside. The bastion server functions as a relay server connecting a highly secure infrastructure to an external Internet, and all inbound traffic needs to pass through the bastion server 131 to enter the internal network.

The remote server 132, which is a server which exists within the private network 130, corresponds to a server which the client attempts to access remotely. The remote server 132 may be a virtual server or a physical server.

As described above, the remote server access system 100 according to an embodiment of the present disclosure may effectively resolve issues associated with existing remote server access methods while providing a differentiated approach that enhances security and cost efficiency through SSH multi-tunneling. In addition, the remote server access system 100 may effectively manage the client's access through the service network, which includes the application server and the proxy server, so that the client does not directly access the bastion server of the target network. In addition, the remote server access system 100 may establish a secure remote access environment without requiring separate VPN equipment or cloud services and may reduce system operating costs by eliminating the need to add proxy servers due to CIDR block duplication. Furthermore, the remote server access system 100 may facilitate easier network management compared to conventional methods, as deleting one network or changing the configuration thereof does not affect connections with other networks.

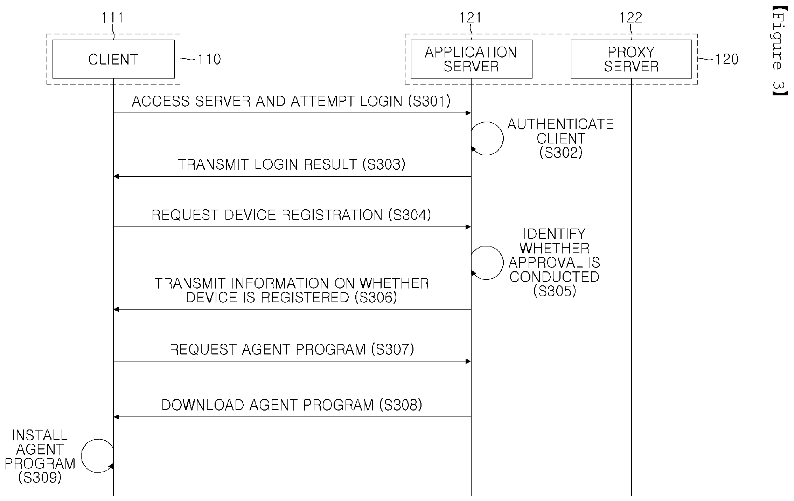

FIG. 3 is a flowchart illustrating an agent program download method according to an embodiment of the present disclosure. The agent program download method may be performed by the remote server access system 100. The flowchart illustrates the agent program download method divided into multiple operations, but at least some operations may be performed in a different sequence, combined with other operations, omitted, subdivided into further operations, or performed with one or more additional operations not shown.

Referring to FIG. 3, the client 111 may access the application server 121 of the service network 120 and perform a login operation according to user instructions or the like (S301).

The application server 121 may perform client authentication on the basis of login information received from the client 111 (S302). When the client authentication succeeds, the application server 121 may provide a remote access service to the client 111.

The application server 121 may transmit a login result to the client 111 (S303).

When the login succeeds, the client 111 may transmit, to the application server 121, a message requesting registration of a device (e.g., a PC) performing the remote access (S304). Here, the request message may include device identification information of the client 111.

The application server 121 may identify whether an authorized party has approved a device registration request from the client 111 (S305). As a result of the identification, when the authorized party approves same, the application server 121 may store the device identification information of the client 111 in a storage.

The application server 121 may transmit, to the client 111, information on whether the device is registered (S306).

When the device is registered, the client 111 may transmit, to the application server 121, a message requesting an agent program for providing remote access services (S307).

The application server 121 may transmit an agent program to the client 111 in response to the request message (S308).

The client 111 may install the agent program received from the application server 121 (S309).

The agent program download may be performed once initially or when the agent program requires updating or reinstallation.

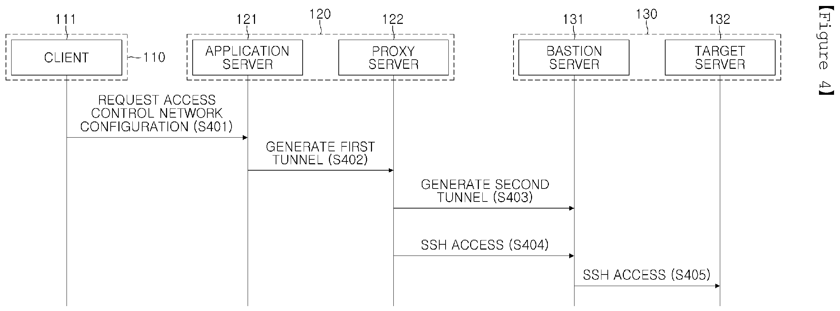

FIG. 4 is a flowchart illustrating an access control network configuration method according to an embodiment of the present disclosure. The access control network configuration method may be performed by the remote server access system 100. The access control network configuration method described above may be performed after executing the agent program download process described above. The flowchart illustrates the access control network configuration method divided into multiple operations, but at least some operations may be performed in a different sequence, combined with other operations, omitted, subdivided into further operations, or performed with one or more additional operations not shown.

Referring to FIG. 4, the client 111 may transmit a message requesting an access control network configuration to the application server 121 of the service network 120 (S401). Here, the request message may include information regarding the target network 130 which the client 111 attempts to access and/or information regarding the target server 132 existing within the target network 130.

When receiving the request message, the application server 121 may temporarily generate a first tunnel between the application server and the proxy server 122 (S402). The first tunnel may be used to configure client account information and server access information of the bastion server 131 existing within the target network 130.

The application server 121 may temporarily generate a second tunnel between the proxy server 122 and the bastion server 131. The second tunnel may be used to configure client account information and server access information of the target server 132 existing within the target network 130.

Through the first and second tunnels, an SSH access may be performed between the proxy server 122 of the service network 120 and the bastion server 131 of the target network 130 (S404). An SSH access may be performed between the bastion server 131 of the target network 130 and the target server 132 (S405).

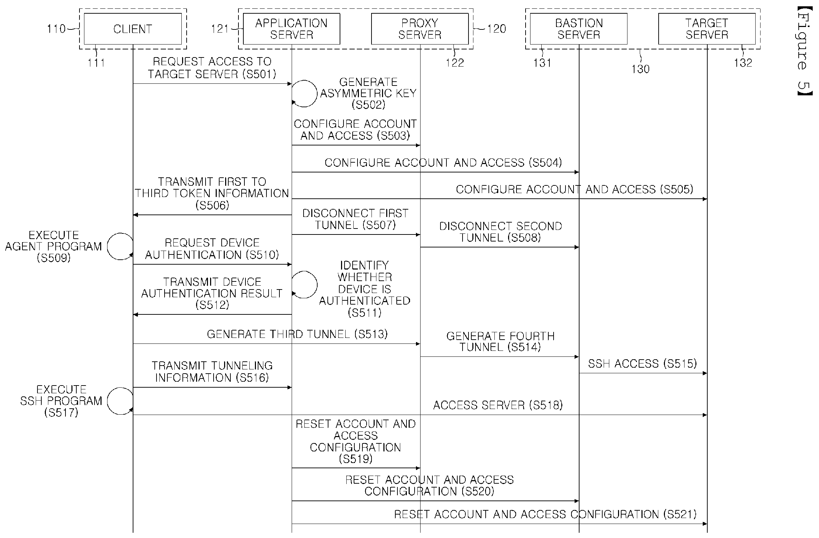

FIG. 5 is a flowchart illustrating a remote server access method according to an embodiment of the present disclosure. The remote server access method may be performed by the remote server access system 100. The remote server access method may be performed after executing the access control network configuration process described above. The flowchart illustrates the remote server access method divided into multiple operations, but at least some operations may be performed in a different sequence, combined with other operations, omitted, subdivided into further operations, or performed with one or more additional operations not shown.

Referring to FIG. 5, the client 111 may transmit, to the application server 121, a message requesting an access to the target server 132 existing within the target network 130 (S501).

The application server 121 may generate an asymmetric key including a public key and a private key when receiving the request message (S502). Here, the public key may be provided to the proxy server 122 and the private key may be provided to the client 111.

The application server 121 may access the proxy server 122 existing within the service network 120 and configure the client account information and server access information of the proxy server 122 (S503). Here, the client account information may include ID information and asymmetric key information of the client 111 existing within the proxy server 122. The server access information may include network path information (e.g., an IP address, a port, and the like) for accessing the proxy server 122.

The application server 121 may generate first token information including the configured client account information and server access information of the proxy server 122. Here, the first token information may be used to generate a third tunnel between the client 111 and the proxy server 122.

The application server 121 may access the bastion server 131 existing within the target network 130 through the temporarily generated first tunnel and configure the client account information and server access information of the bastion server 131 (S504). Here, the client account information may include the ID information and password information of the client 111 existing within the bastion server 131. The server access information may include network path information (e.g., an IP address, a port, and the like) for accessing the bastion server 131.

The application server 121 may generate second token information including the configured client account information and server access information of the bastion server 131. Here, the second token information may be used to generate a fourth tunnel between the proxy server 122 and the bastion server 131.

The application server 121 may access the target server 132 existing within the target network 130 through the temporarily generated second tunnel and configure the client account information and server access information of the target server 132 (S505). Here, the client account information may include the ID information and password information of the client 111 existing within the target server 132. The server access information may include network path information (e.g., an IP address, a port, and the like) for accessing the target server 131.

The application server 121 may generate third token information including the configured client account information and server access information of the target server 132. Here, the third token information may be used to allow the client 111 to access the target server 132 through multiple tunnels.

Thereafter, the application server 121 may encrypt the first to third token information for remote access control of the client 111 and transmit same to the corresponding client 111 (S506).

The application server 121 may disconnect the first tunnel temporarily generated between the application server and the proxy server 122 (S507).

The application server 121 may disconnect the second tunnel temporarily generated between the proxy server 122 and the bastion server 131 (S508).

The client 111 may encrypt the first to third token information received from the application server 121 and store same in the storage.

The client 111 may execute the pre-installed agent program according to user instructions or the like (S509).

The client 111 may transmit a message requesting authentication for a device on which the agent program is installed to the application server 121 when executing the agent program (S510). Here, the request message may include device identification information of the client, where the agent program is installed.

When the request message is received, the application server 121 may identify whether the device identification information of the client where the agent program is installed matches the device identification information of the client registered in the storage (S511).

The application server 121 may provide, to the client 111, an authentication result with respect to the device where the agent program is installed. For example, if the device identification information of the client where the agent program is installed matches the device identification information of the client registered in the storage, the application server 121 may transmit a device authentication success message to the client 111. On the contrary, if the device identification information of the client where the agent program is installed does not match the device identification information of the client registered in the storage, the application server 121 may transmit a device authentication failure message to the client 111.

The client 111 may generate a third tunnel between the client and the proxy server 122 on the basis of the first token information received from the application server 121 (S513). Here, the client 111 may generate the third tunnel by using the agent program.

The client 111 may generate a fourth tunnel between the proxy server 122 and the bastion server 131 on the basis of the second token information received from the application server 121 (S514). Here, the client 111 may generate the fourth tunnel by using the agent program.

An SSH access may be performed between the bastion server 131 and the target network 132 through the third and fourth tunnels (S515).

The client 111 may transmit information (i.e., tunneling information) regarding the third and fourth tunnels to the application server 121 (S516). In this case, the client 111 may transmit the tunneling information to the application server 121 by using the agent program.

The client 111 may execute a pre-installed SSH program according to user instructions or the like (S517).

The client 111 may access the target server 132 existing within the target network 130 on the basis of the third token information received from the application server 121 (S518). Here, the client 111 may access the target server 132 by using the SSH program.

After a predetermined time period (e.g., 5 minutes) has elapsed since the generation time of the third and fourth tunnels, the application server 121 may access the proxy server 122 to reset the client account information and server connection information of the proxy server 122 (S519).

After a predetermined time period (e.g., 5 minutes) has elapsed since the generation time of the third and fourth tunnels, the application server 121 may access the bastion server 131 to reset the client account information and server connection information of the bastion server 131 (S520).

After a predetermined time period (e.g., 5 minutes) has elapsed since the generation time of the third and fourth tunnels, the application server 121 may access the target server 132 to reset the client account information and server connection information of the target server 132 (S521).

As described above, the remote server access method according to an embodiment of the present disclosure may effectively resolve issues associated with existing remote server access methods while providing a differentiated approach that enhances security and cost efficiency through SSH multi-tunneling. In addition, the remote server access method may effectively manage the client's access through the service network, which includes the application server and the proxy server, so that the client does not directly access the bastion server of the target network. In addition, the remote server access method may establish a secure remote access environment without requiring separate VPN equipment or cloud services and may reduce system operating costs by eliminating the need to add proxy servers due to CIDR block duplication. Furthermore, the remote server access method may facilitate easier network management compared to conventional methods, as deleting one network or changing the configuration thereof does not affect connections with other networks.

Meanwhile, each time the client 111 accesses a new remote server 132, the remote server access system 100 may repeatedly perform the access control network configuration process described in FIG. 4 and the remote server access process described in FIG. 5.

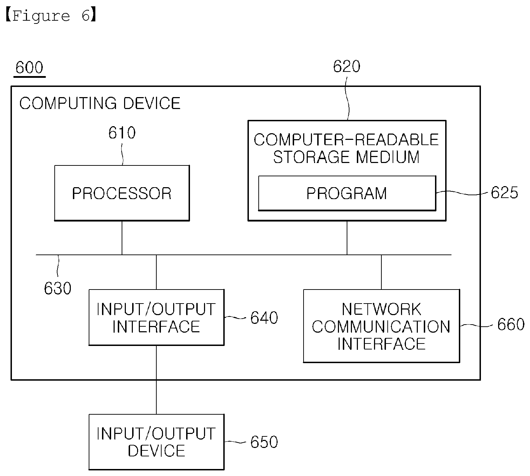

FIG. 6 is a configuration block view of a computing device according to an embodiment of the present disclosure.

Referring to FIG. 6, according to an embodiment of the present disclosure, the computing device 600 includes at least one processor 610, a computer-readable storage medium 620, and a communication bus 630. The computing device 600 may implement at least one of the client 111, the application server 121, the proxy server 122, the bastion server 131, and the remote server 132 described above.

The processor 610 may cause the computing device 600 to be operated according to the above-described exemplary embodiment. For example, the processor 610 may execute at least one program 625 stored in the computer-readable storage medium 620. The at least one program may include one or more computer-executable instructions, and the computer-executable instructions may be configured to cause, when executed by the processor 610, the computing device 600 to perform operations according to an exemplary embodiment.

The computer-readable storage medium 620 is configured to store a computer-executable instruction or program code, program data and/or other suitable form of information. A program 625 stored in the computer-readable storage medium 620 includes a set of instructions executable by the processor 610. In an embodiment, the computer-readable storage medium 620 may include a memory (volatile memory, such as random-access memory, non-volatile memory, or a suitable combination thereof), one or more magnetic disk storage devices, optical disk storage devices, flash memory devices, other forms of storage medium accessible by the computing device 600 and capable of storing desired information, or suitable combinations thereof.

The communication bus 630 may mutually connect various components of the computing device 600 including the processor 610 and the computer-readable storage medium 620.

The computing device 600 may include one or more input/output interfaces 640 providing an interface for one or more input/output device 650, and one or more network communication interface 660. The input/output interface 640 and the network communication interface 660 are connected to the communication bus 630.

The input/output device 650 may be connected to other components of the computing device 600 through the input/output interface 640. The exemplary input/output device 650 may include an input device, such as pointing device (a mouse, a trackpad, or the like), a keyboard, a touch input device (a touchpad, a touchscreen, or the like), a voice or sound input device, various types of sensor device and/or imaging device, and/or a display device, and an output device such as a printer, a speaker and/or a network card. The exemplary input/output device 650 may be included in the computing device 600 as a component constituting the computing device 600 and may be connected to the computing device 600 as a separate device distinct from the computing device 600.

The present disclosure described above may be implemented as a computer-readable code in a medium in which a program is recorded. The computer-readable medium may continuously store a computer-executable program, or may be temporarily stored for execution or download. Furthermore, the medium may be various recording means or storage means in a form of a single or a combination of several hardware, may be not limited to a medium directly connected to any computer system, and may exist on a network while being dispersed. An example of the recording medium may be one configured to store program instructions, including magnetic media such as a hard disk, a floppy disk and a magnetic tape, optical media such as CD-ROM and a DVD, magneto-optical media such as a floptical disk, ROM, RAM, and flash memory. Furthermore, other examples of the recording medium may include an app store in which applications are distributed, a site in which other various pieces of software are supplied or distributed, and recording media and/or storage media managed in a server or the like. Accordingly, the detailed description should not be construed as being limitative from all aspects but should be construed as being illustrative. The scope of the present disclosure should be determined by reasonable analysis of the attached claims.

## Claims

1. A remote server access method of a client (111), the method comprising:
transmitting (S501), to an application server (121) of a service network (120), a message for requesting an access to a target server (132) of a target network (130);
receiving, from the application server (121), token information for accessing the target server (132), wherein the token information includes first token information for accessing a proxy server (122) of the service network (120), second token information for accessing a bastion server (131) of the target network (130), and third token information for accessing the target server (132);
generating multiple tunnels between the client (111) and the bastion server (131) of the target network (130) based on executing a pre-installed agent program, comprising:
generating (S513) a first tunnel between the client (111) and the proxy server (122) of the service network (120) based on the first token information; and
generating (S514) a second tunnel between the proxy server (122) and the bastion server (131) of the target network (130) based on the second token information; and
accessing (S518) the target server (132) in the target network (130) using the generated multiple tunnels and the third token information.

2. The method of claim 1, wherein the first token information comprises client account information and server access information of the proxy server (122), and
wherein the client account information of the proxy server (122) comprises identification information and key information of a client (111) existing within the proxy server (122).

3. The method of claim 1, wherein the second token information comprises client account information and server access information of the bastion server (131), and
wherein the client account information of the bastion server (131) comprises identification information and password information of a client (111) existing within the bastion server (131).

4. The method of claim 1, wherein the third token information comprises client account information and server access information of the target server (132), and
wherein the client account information of the target server (132) comprises identification information and password information of a client (111) existing within the target server (132).

5. The method of claim 1, wherein the accessing the target server (132) comprises:
executing a pre-installed secure shell, SSH, program; and
accessing the target server (132) using the SSH program.

6. The method of claim 1, further comprising transmitting, to the application server (121), tunneling information regarding the generated multiple tunnels.

7. A client (111) comprising:
at least one processor (610) configured to execute a plurality of operations for a remote server access; and
at least one memory (620) configured to store a plurality of instructions for executing the plurality of operations,
wherein the plurality of operations comprise:
an operation of transmitting (S501), to an application server (121) of a service network (120), a message for requesting an access to a target server (132) of a target network (130);
an operation of receiving, from the application server (121), token information for accessing the target server (132), wherein the token information includes first token information for accessing a proxy server (122) of the service network (120), second token information for accessing a bastion server (131) of the target network (130), and third token information for accessing the target server (132);
an operation of generating multiple tunnels between the client (111) and the bastion server (131) of the target network (130) based on executing a pre-installed agent program, comprising:
an operation of generating (S513) a first tunnel between the client (111) and the proxy server (122) of the service network (120) based on the first token information; and
an operation of generating (S514) a second tunnel between the proxy server (122) and the bastion server (131) of the target network (130) based on the second token information; and
an operation of accessing (S518) the target server (132) in the target network (130) using the generated multiple tunnels and the third token information.

8. The client (111) of claim 7, wherein the operation of accessing the target server (132) comprises:
executing a pre-installed secure shell, SSH, program; and
accessing the target server (132) using the SSH program.

9. The client (111) of claim 7, wherein the plurality of operations further comprise transmitting, to the application server (121), tunneling information regarding the generated multiple tunnels.

## Patentansprüche

1. Remote-Server-Zugriffsverfahren eines Clients (111), wobei das Verfahren umfasst:
Senden (S501) einer Nachricht an einen Anwendungsserver (121) eines Dienstnetzwerks (120), um einen Zugriff auf einen Zielserver (132) eines Zielnetzwerks (130) anzufordern;
Empfangen von Token-Informationen vom Anwendungsserver (121) für den Zugriff auf den Zielserver (132), wobei die Token-Informationen erste Token-Informationen für den Zugriff auf einen Proxy-Server (122) des Dienstnetzwerks (120), zweite Token-Informationen für den Zugriff auf einen Bastion-Server (131) des Zielnetzwerks (130) und dritte Token-Informationen für den Zugriff auf den Zielserver (132) umfassen;
Erzeugen mehrerer Tunnel zwischen dem Client (111) und dem Bastion-Server (131) des Zielnetzwerks (130) basierend auf der Ausführung eines vorinstallierten Agentenprogramms, umfassend:
Erzeugen (S513) eines ersten Tunnels zwischen dem Client (111) und dem Proxy-Server (122) des Dienstnetzwerks (120) basierend auf den ersten Token-Informationen; und
Erzeugen (S514) eines zweiten Tunnels zwischen dem Proxy-Server (122) und dem Bastion-Server (131) des Zielnetzwerks (130) basierend auf den zweiten Token-Informationen; und
Zugreifen (S518) auf den Zielserver (132) im Zielnetzwerk (130) unter Verwendung der erzeugten mehreren Tunnel und der dritten Token-Informationen.

2. Verfahren nach Anspruch 1, wobei die ersten Token-Informationen Client-Kontoinformationen und Serverzugriffsinformationen des Proxy-Servers (122) umfassen, und
wobei die Client-Kontoinformationen des Proxy-Servers (122) Identifikationsinformationen und Schlüsselinformationen eines im Proxy-Server (122) vorhandenen Clients (111) umfassen.

3. Verfahren nach Anspruch 1, wobei die zweiten Token-Informationen Client-Kontoinformationen und Serverzugriffsinformationen des Bastion-Servers (131) umfassen, und
wobei die Client-Kontoinformationen des Bastion-Servers (131) Identifikationsinformationen und Passwortinformationen eines auf dem Bastion-Server (131) vorhandenen Clients (111) umfassen.

4. Verfahren nach Anspruch 1, wobei die dritten Token-Informationen Client-Kontoinformationen und Serverzugriffsinformationen des Zielservers (132) umfassen, und
wobei die Client-Kontoinformationen des Zielservers (132) Identifikationsinformationen und Passwortinformationen eines auf dem Zielserver (132) vorhandenen Clients (111) umfassen.

5. Verfahren nach Anspruch 1, wobei das Zugreifen auf den Zielserver (132) umfasst:
Ausführen eines vorinstallierten Secure-Shell-(SSH-)Programms; und
Zugreifen auf den Zielserver (132) unter Verwendung des SSH-Programms.

6. Verfahren nach Anspruch 1, ferner umfassend das Senden von Tunneling-Informationen in Bezug auf die erzeugten mehreren Tunnel an den Anwendungsserver (121).

7. Client (111), umfassend:
wenigstens einen Prozessor (610), ausgebildet zum Ausführen einer Vielzahl von Operationen für einen Remote-Server-Zugriff; und
wenigstens einen Speicher (620), ausgebildet zum Speichern einer Vielzahl von Anweisungen zum Ausführen der Vielzahl von Operationen,
wobei die Vielzahl von Operationen umfasst:
eine Operation zum Senden (S501) einer Nachricht an einen Anwendungsserver (121) eines Dienstnetzwerks (120), um einen Zugriff auf einen Zielserver (132) eines Zielnetzwerks (130) anzufordern;
eine Operation zum Empfangen von Token-Informationen vom Anwendungsserver (121) für den Zugriff auf den Zielserver (132), wobei die Token-Informationen erste Token-Informationen für den Zugriff auf einen Proxy-Server (122) des Dienstnetzwerks (120), zweite Token-Informationen für den Zugriff auf einen Bastion-Server (131) des Zielnetzwerks (130) und dritte Token-Informationen für den Zugriff auf den Zielserver (132) umfassen;
eine Operation zum Erzeugen mehrerer Tunnel zwischen dem Client (111) und dem Bastion-Server (131) des Zielnetzwerks (130) basierend auf der Ausführung eines vorinstallierten Agentenprogramms, umfassend:
eine Operation zum Erzeugen (S513) eines ersten Tunnels zwischen dem Client (111) und dem Proxy-Server (122) des Dienstnetzwerks (120) basierend auf den ersten Token-Informationen; und
eine Operation zum Erzeugen (S514) eines zweiten Tunnels zwischen dem Proxy-Server (122) und dem Bastion-Server (131) des Zielnetzwerks (130) basierend auf den zweiten Token-Informationen; und
eine Operation zum Zugreifen (S518) auf den Zielserver (132) im Zielnetzwerk (130) unter Verwendung der erzeugten mehreren Tunnel und der dritten Token-Informationen.

8. Client (111) nach Anspruch 7, wobei die Operation zum Zugreifen auf den Zielserver (132) umfasst:
Ausführen eines vorinstallierten Secure-Shell-Programms (SSH); und
Zugreifen auf den Zielserver (132) unter Verwendung des SSH-Programms.

9. Client (111) nach Anspruch 7, wobei die Vielzahl von Operationen ferner das Senden von Tunneling-Informationen in Bezug auf die erzeugten mehreren Tunnel an den Anwendungsserver (121) umfasst.

## Revendications

1. Procédé d'accès à distance à un serveur par un client (111), le procédé comprenant :
la transmission (S501), à un serveur d'applications (121) d'un réseau de services (120), d'un message demandant l'accès à un serveur cible (132) d'un réseau cible (130) ;
la réception, en provenance du serveur d'applications (121), d'informations de jeton permettant d'accéder au serveur cible (132), dans lequel lesdites informations de jeton incluent : des informations de premier jeton permettant d'accéder à un serveur proxy (122) du réseau de services (120), des informations de deuxième jeton permettant d'accéder à un serveur bastion (131) du réseau cible (130), et des informations de troisième jeton permettant d'accéder au serveur cible (132) ;
la génération de plusieurs tunnels entre le client (111) et le serveur bastion (131) du réseau cible (130) sur la base de l'exécution d'un programme agent préinstallé, comprenant :
la génération (S513) d'un premier tunnel entre le client (111) et le serveur proxy (122) du réseau de services (120) sur la base des informations de premier jeton ; et
la création (S514) d'un deuxième tunnel entre le serveur proxy (122) et le serveur bastion (131) du réseau cible (130) sur la base des informations de deuxième jeton ; et
l'accès (S518) au serveur cible (132) dans le réseau cible (130) à l'aide de plusieurs tunnels générés et des informations de deuxième jeton.

2. Procédé selon la revendication 1, dans lequel les informations de premier jeton comprennent des informations de compte client et des informations d'accès au serveur du serveur proxy (122), et
dans lequel les informations de compte client du serveur proxy (122) comprennent des informations d'identification et des informations de clé d'un client (111) existant au sein du serveur proxy (122).

3. Procédé selon la revendication 1, dans lequel les informations de deuxième jeton comprennent des informations de compte client et des informations d'accès au serveur du serveur bastion (131), et
dans lequel les informations de compte client du serveur bastion (131) comprennent des informations d'identification et des informations de mot de passe d'un client (111) présent au sein du serveur bastion (131).

4. Procédé selon la revendication 1, dans lequel les informations de troisième jeton comprennent des informations de compte client et des informations d'accès au serveur du serveur cible (132), et
dans lequel les informations de compte client du serveur cible (132) comprennent des informations d'identification et des informations de mot de passe d'un client (111) présent au sein du serveur cible (132).

5. Procédé selon la revendication 1, dans lequel l'accès au serveur cible (132) comprend :
l'exécution d'un programme Secure Shell (SSH) préinstallé ; et
l'accès au serveur cible (132) à l'aide du programme SSH.

6. Procédé selon la revendication 1, comprenant en outre la transmission, au serveur d'applications (121), d'informations de tunnelisation concernant les plusieurs tunnels générés.

7. Client (111) comprenant :
au moins un processeur (610) configuré pour exécuter une pluralité d'opérations en vue d'un accès à un serveur distant ; et
au moins une mémoire (620) configurée pour stocker une pluralité d'instructions destinées à l'exécution de ladite pluralité d'opérations,
dans lequel ladite pluralité d'opérations comprennent :
une opération consistant à transmettre (S501), à un serveur d'applications (121) d'un réseau de services (120), un message demandant l'accès à un serveur cible (132) d'un réseau cible (130) ;
une opération consistant à recevoir, depuis le serveur d'applications (121), des informations de jeton permettant d'accéder au serveur cible (132), dans lequel les informations de jeton incluent des informations de premier jeton permettant d'accéder à un serveur proxy (122) du réseau de services (120), des informations de deuxième jeton permettant d'accéder à un serveur bastion (131) du réseau cible (130), et des informations de troisième jeton permettant d'accéder au serveur cible (132) ;
une opération consistant à générer plusieurs tunnels entre le client (111) et le serveur bastion (131) du réseau cible (130) sur la base de l'exécution d'un programme agent préinstallé, comprenant :
une opération consistant à générer (S513) un premier tunnel entre le client (111) et le serveur proxy (122) du réseau de services (120) sur la base des informations de premier jeton ; et
une opération consistant à générer (S514) un deuxième tunnel entre le serveur proxy (122) et le serveur bastion (131) du réseau cible (130) sur la base des informations de deuxième jeton ; et
une opération consistant à accéder (S518) au serveur cible (132) dans le réseau cible (130) à l'aide des plusieurs tunnels et des informations de troisième jeton.

8. Client (111) selon la revendication 7, dans lequel l'opération d'accès au serveur cible (132) comprend :
l'exécution d'un programme Secure Shell (SSH) préinstallé ; et
l'accès au serveur cible (132) en utilisant le programme SSH.

9. Client (111) selon la revendication 7, dans lequel la pluralité d'opérations comprennent en outre la transmission, vers le serveur d'applications (121), d'informations de tunnel concernant les plusieurs tunnels générés.
